# NEUE EUROPÄISCHE PATENTSCHRIFT

(11) **EP 1 258 399 B2**
(45) Veröffentlichungstag und Bekanntmachung des Hinweises auf die Entscheidung über den Einspruch: **22.06.2011**
(45) Hinweis auf die Patenterteilung: 15.06.2005
(21) Anmeldenummer: 02008077.6
(22) Anmeldetag: 11.04.2002
(51) Int. Cl.: B60R 21/01

(54) **Verfahren für eine Aktivierung einer Insassenschutzanwendung in einem Kraftfahrzeug**
Method for activating a passenger protection application in a motor vehicle
Procédé pour l'activation d'une application de protection de passager dans un véhicule à moteur

(30) Priorität: 12.05.2001 DE 10123215
(43) Veröffentlichungstag der Anmeldung: 20.11.2002
(73) Patentinhaber: ROBERT BOSCH GMBH, 70442 Stuttgart (DE)
(72) Erfinder: Mattes, Bernhard, 74343 Sachsenheim (DE); Roelleke, Michael, 71229 Leonberg-Hoefingen (DE); Lahmann, Robert, 70174 Stuttgart (DE)

(56) Entgegenhaltungen:
- DE-A- 3 609 839
- DE-A- 19 609 176
- DE-A1- 19 905 379
- DE-C- 19 632 363
- DE-C1- 19 632 363
- DE-C1- 19 651 124
- DE-T2- 69 005 598
- GB-A- 2 335 521
- US-A- 5 890 084

## Beschreibung

### STAND DER TECHNIK

Die vorliegende Erfindung betrifft ein Verfahren für eine Aktivierung einer Insassenschutzanwendung in einem Kraftfahrzeug, insbesondere bei Überrollvorgängen.

Obwohl auf beliebige Schutzanwendungen anwendbar, werden die vorliegende Erfindung sowie die ihr zugrundeliegende Problematik in bezug auf ein Insassenschutzsystem in einem Kraftfahrzeug bei Überrollvorgängen desselben erläutert.

Unfälle, bei denen lediglich ein Kraftfahrzeug beteiligt ist, nehmen einen nicht zu verachtenden Anteil von über einem Drittel aller Unfälle ein. Dabei kommen bei diesen Einfahrzeugunfällen die meisten Insassen bei Überrollvorgängen des Kraftfahrzeuges ums Leben.

Bisher bekannte Insassenschutzanwendungen bei Überrollvorgängen von Kraftfahrzeugen sind sogenannte Überrollbügelsysteme. Diese sollen den Überlebensraum sicherstellen und die Insassen von Cabriolets im Falle eines Überschlages vor einem Aufprall des Körpers auf die Fahrbahn bzw. den Erdboden schützen. Sie sind bei einer typischen Ausführungsform direkt hinter den Fahrzeugsitzen angeordnet und weisen einen Überrollbügel auf, der im Normalzustand gegen die Kraft einer Feder vorgespannt und im Gefahrenfall, ausgelöst durch entsprechende Sensoren am Fahrzeug, in eine schützende Endposition gefahren werden kann.

Ferner sind dem Anmelder Schutzsysteme bei Überrollvorgängen bekannt, die als sogenannte Fenster-Airbags ausgebildet sind.

Für eine Auslösung der entsprechenden Schutzanwendung ist eine rechtzeitige Erkennung von Überrollvorgängen erforderlich. Gemäß den Ansätzen nach dem Stand der Technik erfolgt eine solche Erkennung mittels Drehratensensoren, wobei mittels Umwandlung von Rotationsenergie in potentielle Energie eine Vorhersage eines möglichen Überschlages bei Drehwinkeln des Fahrzeuges in einem Bereich zwischen etwa 25° und 55° möglich ist.

Als nachteilhaft bei diesem bekannten Ansatz hat sich u.a. die Tatsache herausgestellt, dass Systeme mit Drehratensensoren Grenzfrequenzen von etwa 30 Hz aufweisen, wodurch eine Auslöseentscheidung in einer Zeitspanne von etwa 300ms getroffen werden kann.

Bei sogenannten ROSE-Vorgängen (ROSE = Rotations-Sensierung), d.h. bei Überrollvorgängen aufgrund von Überfahrten einer Rampe bzw. einer Abhangskippe, reichen diese Auslöseentscheidungs-Zeitspannen aus, eine rechtzeitig Auslösung der entsprechenden Schutzanwendung zu veranlassen.

Allerdings kommt es bei sogenannten SOIL-TRIP-Vorgängen schon zu Beginn zu einer Querbeschleunigung des Kraftfahrzeuges, die den Insassen äußerst schnell aus seiner ursprünglichen Fahrposition bringt. Solche Vorgänge können beispielsweise durch einen Wechsel des Untergrundes (µ-Wechsel), eine seitliche Bewegung auf weichem Untergrund mit einem anschließenden Eingrabvorgang, durch Anschlagen an einer harten Kante bzw. Bürgersteigkante, oder dergleichen erfolgen. Je nach Manöver treten unterschiedliche Verzögerungen auf, welche dann für eine Verlagerung des Insassen in Bewegungsrichtung bis zum Kontakt mit beispielsweise der Seitenscheibe auf Seite der entsprechenden Drehachse sorgt. Da es bei solchen Vorgängen eine wesentlich schnellere Auslöseentscheidung getroffen werden muss als bei den ROSE-Vorgängen, reichen die Grenzfrequenzen der Drehratensensoren nicht mehr aus, um rechtzeitig die entsprechende Insassenschutzanwendung auszulösen.

Aus DE 36 09 839 A1 ist eine gattungsgemäße Vorrichtung zum selbsttätigen Auslösen von Insassenschutzvorrichtungen bei einem Unfall bekannt, mit der sowohl die Winkelbeschleunigung, die Winkelgeschwindigkeit als auch die Lage bei einem Überrollvorgang erfassbar sind. Zusätzlich ist es möglich, eine Längsbeschleunigung, die z. B. bei einem Crashunfall auftritt zu erfassen. Aus US-A-5,890,084 ist die Verwendung von Beschleunigungssensoren in allen drei Raumrichtungen bekannt, um daraus die Wand- und Rollrate zu bestimmen. Aus DE 196 09 176 A1 ist es bekannt, Beschleunigungssensoren in allen Raumrichtungen zu verwenden und auch gegebenenfalls Drehratensensoren. Aus GB 2 335 521 A ist es bekannt, bei einem Überrollvorgang Insassenschutzmittel in Abhängigkeit von einer Drehgeschwindigkeit um die Fahrzeuglängsachse und eine Fahrzeugquerbeschleunigung anzusteuern.

### VORTEILE DER ERFINDUNG

Das erfindungsgemäße Verfahren mit den Merkmalen des Anspruchs 1 weist gegenüber dem bekannten Lösungsansatz den Vorteil auf, dass größere Messfrequenzen erzielbar sind und somit eine rechtzeitige Auslöseentscheidung auch bei schnell vonstatten gehenden Überrollvorgängen getroffen werden kann.

Die der vorliegenden Erfindung zugrundeliegende Idee besteht darin, dass die Drehbeschleunigung der Drehbewegung des Kraftfahrzeuges, insbesondere um eine zur Fahrzeuglängsachse parallelen Drehachse mittels einer Drehbeschleunigungs-Sensoreinrichtung gemessen wird. Danach werden die Messergebnisse mittels einer Recheneinheit für eine Bewertung der Fahrzeugsituation gegenüber seiner Umgebung ausgewertet und für den Fall, daß die Auswertung einen bevorstehenden Überrollvorgang des Kraftfahrzeuges ergibt, wird eine passende Schutzanwendung aktiviert.

Dadurch kann die Grenz- bzw. Messfrequenz des Messvorgangs erheblich erhöht werden, und somit ist eine rechtzeitige Aktivierung einer entsprechenden Schutzanwendung auch für schnell ablaufende Überrollvorgänge möglich.

In den Unteransprüchen finden sich vorteilhafte Weiterbildungen und Verbesserungen des in Anspruch 1 angegebenen Verfahrens.

Gemäß einer bevorzugten Weiterbildung wird die Insassenschutzanwendung als Fenster-Airbag und/oder Überrollbügel ausgebildet. Dies bietet sowohl einem Cabriolet-Insassen vor einem Aufschlagen seines Körpers auf dem Fahrboden ausreichend Schutz, als auch einem Insassen vor einem Schlagen seines Körpers gegen das jeweilige Seitenfenster.

Gemäß einer weiteren bevorzugten Weiterbildung wird die gemessene Drehbeschleunigung mittels einer Recheneinheit und eines Algorithmus in weitere physikalische Größen, wie beispielsweise Drehgeschwindigkeit und/oder zu erwartender Drehwinkel des Überrollvorgangs umgewandelt. Dadurch ist alleinig aus einer Drehbeschleunigungsmessung berechenbar, ob mit einem Drehwinkel des Kraftfahrzeuges zu rechnen ist, der für einen Überrollvorgang ausreichend groß ist. In diesem Falle kann rechtzeitig eine Auslöseentscheidung über eine Auslösung einer Schutzanwendung getroffen werden.

Gemäß einer weiteren bevorzugten Weiterbildung wird eine Aktivierungsentscheidung mittels einer Auslöseentscheidungseinheit innerhalb eines Zeitraumes von 100 ms erreicht. Dies ist eine deutliche Verbesserung gegenüber der Zeitspanne nach den Ansätzen des Standes der Technik.

Gemäß einer weiteren bevorzugten Weiterbildung wird die Drehachse durch die Auflagepunkte der entsprechenden Kraftfahrzeugräder festgelegt. Allerdings sei bereits an dieser Stelle vermerkt, daß auch andere Drehachsen denkbar sind und nach demselben Prinzip behandelt werden können.

Gemäß einer weiteren bevorzugten Weiterbildung werden zusätzliche Beschleunigungs-Sensoreinrichtungen für eine Messung mindestens einer translatorischen Beschleunigung senkrecht zur Fahrtrichtung verwendet, wobei die Meßergebnisse für die Bewertung der Fahrzeugsituation von der Recheneinheit mit berücksichtigt werden.

Gemäß einer weiteren bevorzugten Weiterbildung wird aus den gemessenen translatorischen Beschleunigungen mittels der Recheneinheit und eines Algorithmus eine Verschiebung des Kraftfahrzeugschwerpunktes in eine bestimmte Richtung erfaßt und gegebenenfalls die entsprechende Schutzanwendung auf der entsprechenden Seite aktiviert. Durch eine solche Erfassung kann ermittelt werden, zu welcher Seite hin sich die Insassen aufgrund des Überrollvorgangs bewegen, und dem entsprechend können die geeigneten Schutzanwendungen ausgelöst bzw. aktiviert werden.

Gemäß der Erfindung wird der Drehbeschleunigungsverlauf auf der Basis von Kraftfahrzeugversuchen klassifiziert. Solche Versuchsergebnisse werden in einer Speichereinrichtung, beispielsweise in der Recheneinheit abgespeichert und mit den momentanen Meßergebnissen verglichen. Daraus werden zusätzliche Informationen über den unmittelbar folgenden Vorgang erlangt.

Gemäß einer weiteren bevorzugten Weiterbildung können aus der gemessenen Drehbeschleunigung auch hochfrequente Meßanteile ausgewertet werden. Durch eine Integration der Drehbeschleunigung können Drehratensignale erzeugt werden, die bereits durch den Integrationsvorgang tiefpaßgefiltert sind. Dies erleichtert die frühzeitige Erkennung eines Überrollvorgangs und ermöglicht somit eine rechtzeitige Aktivierung einer Schutzanwendung.

Gemäß einer weiteren bevorzugten Weiterbildung wird die Drehbeschleunigungs-Sensoreinrichtung zusätzlich mit einem Drehratenausgang für ein Liefern der Drehgeschwindigkeit ausgestattet. Dieses Signal kann beispielsweise dem bekannten System bei ROSE-Vorgängen zugeführt werden, so daß eine Zusatzsensorik geschaffen worden ist.

Gemäß einer weiteren bevorzugten Weiterbildung wird neben der Drehbeschleunigungs-Sensoreinrichtung zusätzlich ein Drehratensensor vorgesehen. Dieser kann zusätzlich die gemessene Drehgeschwindigkeit an das bereits existierende System für einen ROSE-Vorgang liefern. Auch hierbei stellt das System der vorliegenden Erfindung eine Zusatzsensorik für das bereits bekannte System dar.

Gemäß einer weiteren bevorzugten Weiterbildung werden die aus der Drehbeschleunigung erhaltenen physikalischen Größen einem weiteren Entscheidungspfad zugeführt, wobei gemäß einem "Und"- oder einem "Oder"-Kriterium die einzelnen Pfade in die Auslöseentscheidungseinheit für eine Entscheidung über die Auslösung einer Schutzanwendung eingebracht werden. Somit können verschiedene Auswertungen unterschiedlicher physikalischer Größen für eine Auslöseentscheidung mit berücksichtigt werden.

Gemäß einer weiteren bevorzugten Weiterbildung ist die Drehbeschleunigungs-Sensoreinrichtung als mikromechanischer Drehbeschleunigungssensor ausgebildet. Allerdings sind auch andere Drehbeschleunigungssensoren denkbar.

Gemäß einer weiteren bevorzugten Weiterbildung ist die Grenzfrequenz bzw. Messfrequenz der Drehbeschleunigungs-Sensoreinrichtung größer als 100 Hz. Somit ist eine Reaktion auf den Beginn eines Überrollvorgangs innerhalb eines sehr kurzen Zeitraums möglich.

### ZEICHNUNGEN

Ausführungsbeispiele der Erfindung sind in den Zeichnungen dargestellt und in der nachfolgenden Beschreibung näher erläutert.

Es zeigen:
- Fig. 1: eine schematische Darstellung eines Überrollvorgangs eines Kraftfahrzeuges;
- Fig. 2: ein Blockschaltbild eines Systems für eine Aktivierung einer Insassenschutzanwendung gemäß einem ersten Ausführungsbeispiel der vorliegenden Erfindung; und
- Fig. 3: ein Blockschaltbild eines Systems für eine Aktivierung einer Insassenschutzanwendung gemäß einem zweiten Ausführungsbeispiel der vorliegenden Erfindung.

### BESCHREIBUNG DER AUSFÜHRUNGSBEISPIELE

In den Figuren bezeichnen gleiche Bezugszeichen gleiche oder funktionsgleiche Komponenten.

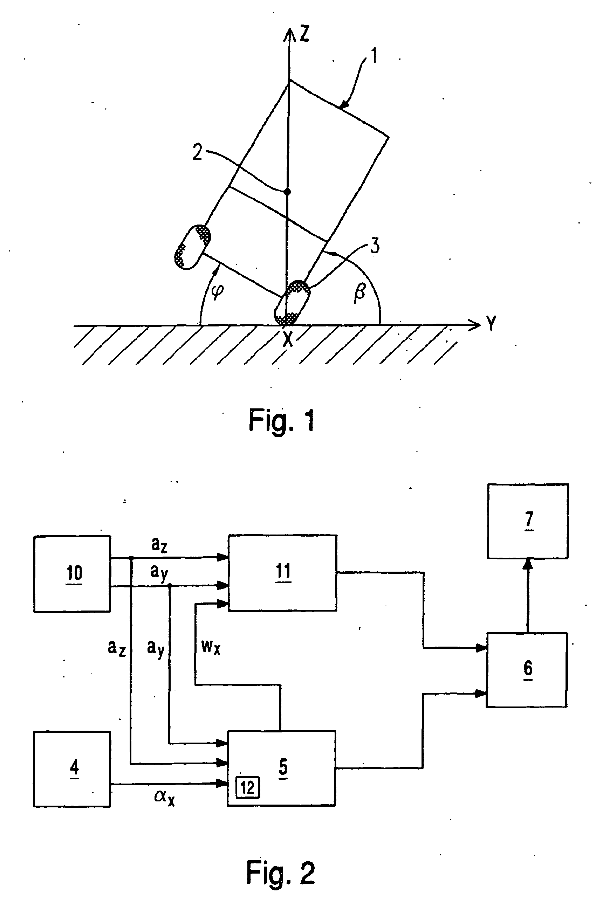

Fig. 1 illustriert eine schematische Darstellung eines Überrollvorgangs eines Kraftfahrzeuges 1. Das Kraftfahrzeug 1 ist als starrer Körper definiert und wird in Fig. 1 durch ein Rechteck graphisch dargestellt. Abhängig von den Koordinaten des Schwerpunktes 2 im körperfesten kartesischen Koordinatensystem x , y und z, wobei die x-Achse senkrecht zur y-Achse und z-Achse entlang der Kraftfahrzeuglängsachse verläuft, existiert ein fahrzeugspezifischer Wankwinkel β bzw. kritischer Winkel β, bei welchem sich das Kraftfahrzeug 1 in einer labilen Gleichgewichtslage befindet. Der Schwerpunkt 2 liegt in dieser Situation senkrecht über dem Bodenaufstandspunkt x, der durch die Auflagepunkte der noch auf dem Boden aufliegenden Kraftfahrzeugrädern 3 definiert ist und parallel zu der Längsachse des Kraftfahrzeuges verläuft.

An dieser Stelle sei bemerkt, dass die Drehachse auch eine andere Orientierung aufweisen kann. Das hier erläuterte Prinzip und die notwendigen Algorithmen sind auf anders orientierte Drehachsen leicht transformierbar.

Üblicherweise kommt es zu einem Überrollvorgang bzw. einem Kippvorgang, falls der kritische Winkel β unterschritten wird. Dabei befindet sich der Schwerpunkt 2 des Kraftfahrzeuges 1 außerhalb der Auflagefläche des Kraftfahrzeuges. Allerdings entscheiden geringfügige Kräfteeinwirkungen auf das Kraftfahrzeug 1, ob es zum vollständigen Überrollvorgang kommt oder nicht. Die Realität zeigt nämlich, dass Situationen auftreten, bei denen die labile Gleichgewichtslage zwar überschritten wird, es allerdings dennoch nicht zu einem Überrollvorgang kommt. Ursache hierfür ist u.a. das Verhalten des Lenkungssystems, das eventuell durch unvorhersehbares Eingreifen des Fahrers beeinflußt wird, und eine Bewegung der Insassen, die zu einer Verlagerung des Schwerpunktes führt.

Benutzt man allerdings den fahrzeugspezifischen kritischen Winkel β als Auslöseschwelle für eine Schutzanwendung, so erhält man Auslösezeiten, zu denen ein rechtzeitiges Aktivieren einer Schutzanwendung nicht möglich ist. Daher sind dynamische Auslöseschwellen notwendig, die das zukünftige Verhalten des Fahrzeugs berücksichtigen und vorab berechnen.

Solche Algorithmen sind aus der Literatur wohlbekannt und bedürfen daher hier keiner weiteren Erläuterung. Im wesentlichen erfolgt im Sinne einer Energiebetrachtung eine Berechnung des zu erwartenden Drehwinkels ϕₘₐₓ des Kraftfahrzeuges 1 aus einer anfänglich gemessenen physikalischen Größe, insbesondere der Drehzahl wₓ um eine Fahrzeuglängsachse.

Fig. 2 zeigt ein Blockschaltbild des Systems gemäß einem ersten Ausführungsbeispiel der vorliegenden Erfindung, anhand dessen das Verfahren für eine Aktivierung einer Insassenschutzanwendung 7 im folgenden näher erläutert wird.

Ein im Kraftfahrzeug 1 angebrachter Drehbeschleunigungssensor 4, beispielsweise ein mikromechanischer Drehbeschleunigungssensor, misst die momentan auftretende Drehbeschleunigung αₓ um die Drehachse x zu Beginn eines möglichen Überrollvorganges, d.h. bei Absenkung oder Anhebung des Schwerpunktes 2 des Kraftfahrzeuges 1. Eingeleitet werden solche Positionsänderungen des Schwerpunktes beispielsweise durch einen Untergrundwechsel, eine seitliche Bewegung auf einem weichen Untergrund mit einer anschließenden Bodenverhakung, einem Anschlagen an einer Bürgersteigkante, oder dergleichen. Je nach Ursachenart treten unterschiedliche Verzögerungen bzw. Drehbeschleunigungen αₓ und Lateralbeschleunigungen a_{y} auf. Diese Beschleunigungen sorgen für eine Verlagerung der Insassen.

Die gemessene Drehbeschleunigung αₓ wird an eine Recheneinheit 5 übertragen, die mit dem Drehbeschleunigungssensor 4 verbunden ist. In der Recheneinheit 5 kann die Drehbeschleunigung αₓ mittels Integration in weitere physikalische Größen, wie Drehgeschwindigkeit ωₓ oder Drehwinkel ϕ, umgerechnet und mit bekannten Algorithmen ausgewertet werden. Durch solche Algorithmen ist schließlich berechenbar, mit was für einem maximalen Drehwinkel ϕₘₐₓ die Kippbewegung aufgrund der Drehbeschleunigung αₓ voraussichtlich stattfinden wird. Sollte dieser Drehwinkel ϕₘₐₓ eine Drehung des Kraftfahrzeuges 1 über einen kritischen, vorbestimmten Winkel β hinaus verursachen, so kann mittels einer Auslöseentscheidungseinheit 6, die mit der Recheneinheit 5 verbunden ist, eine entsprechende Insassenschutzanwendung 7 aktiviert werden.

Zusätzlich wird eine Klassifizierung des Drehbeschleunigungsverlaufes vorgenommen, die auf Basis von Fahrzeugversuchen verifiziert und in einem Speicher 12 in der Recheneinheit 5 abgespeichert wird. Sie beschreibt die Energieeinleitung in die Kraftfahrzeugräder 3 und das Fahrwerk des Kraftfahrzeuges 1. Dabei ist die Drehbeschleunigung αₓ ein Maß für die durch die Querverzögerung a_{y} auftretende Drehbewegung.

Gemäß dem vorliegenden Ausführungsbeispiel sind weitere Beschleunigungssensoren 10 für eine Messung der translatorischen Beschleunigungen a_{z} und a_{y} in dem System vorgesehen. Gemäß dem vorliegenden Ausführungsbeispiel werden die gemessenen translatorischen Beschleunigungen a_{y} und a_{z} zusätzlich als Schwellwerte in den Drehbeschleunigungspfad übertragen, wie in Fig. 2 ersichtlich. Mittels der Recheneinheit 5 kann eine Umrechnung in weitere physikalische Größen, beispielsweise Weg oder Geschwindigkeit, umgerechnet werden. Diesen Werten sind zusätzliche Informationen über die Fahrzeugsituation entnehmbar, beispielsweise in welche Richtung sich der Schwerpunkt 2 des Kraftfahrzeuges 1 verschiebt, d.h. zu welcher Seite hin ein möglicher Überrollvorgang bevorsteht. Sollte demnach eine der gemessenen bzw. berechneten Größen einen entsprechenden Schwellwert übersteigen, d.h. einen bevorstehenden Überrollvorgang zu einer bestimmten Fahrzeugseite hin signalisieren, so wird ein entsprechendes Signal an die Auslöseentscheidungseinheit 6 geliefert, die daraufhin die entsprechende Insassenschutzanwendung 7 aktiviert.

Somit wird anhand dieser gemessenen Werte der Drehbeschleunigung αₓ und translatorischen Beschleunigungen a_{y} und a_{z} entschieden, ob eine und insbesondere welche Schutzanwendung 7 aktiviert wird. Dies ist insbesondere bei irreversiblen Schutzanwendungen von Vorteil, da nur die benötigten gezielt aktiviert werden.

Das vorab beschriebene System ist mit dem bekannten Algorithmus für ROSE-Vorgänge gekoppelt. Unter diesem Algorithmus stellen die translatorischen Beschleunigungen a_{y} und a_{z}, die Beschleunigungen in einer Richtung senkrecht zur Längsachse des Kraftfahrzeuges 1, die Eingangsgrößen dar. Zusätzlich wird in diesen Pfad die Drehgeschwindigkeit ωₓ von der Recheneinheit 5 eingebracht, welche durch Integration aus der ermittelten Drehbeschleunigung αₓ berechenbar ist.

Durch eine wesentlich höhere Grenzfrequenz des Drehbeschleunigungssensors 4 als bei Drehratensensoren, die größer als 100 Hz beträgt, ist die systembedingte Verzögerung geringer, und es kann somit schneller auf den Beginn eines Überrollvorgangs reagiert werden. Hochfrequente Signalanteile können in diesem Algorithmus mit ausgewertet werden. Eine spezielle Filterung mit einem anschließenden Schwellenvergleich, d.h. einer Abschätzung, inwiefern es zu einem Überrollvorgang kommen kann, ermöglicht somit die frühzeitige Erkennung. Dadurch steht bereits nach etwa 100 ms eine Auslöseentscheidung zur Verfügung. Die Auslöseentscheidungseinheit 6 kann lediglich anhand der Signale der Recheneinheit 5 oder in Verbindung mit den Signalen der Auswerteeinheit 11 eine Entscheidung für eine Auslösung einer Insassenschutzanwendung 7 treffen.

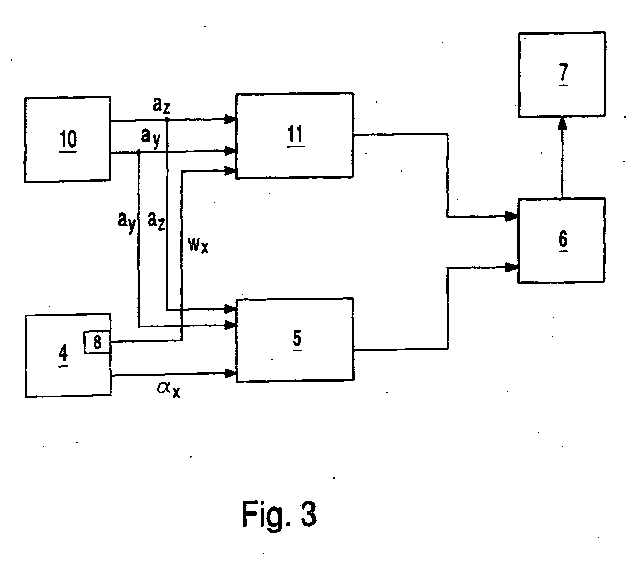

Fig. 3 zeigt ein Blockschaltbild eines Systems für eine Aktivierung einer Insassenschutzanwendung gemäß einem zweiten Ausführungsbeispiel der vorliegenden Erfindung.

Da es bei Umrechnungen von physikalischen Größen, beispielsweise in der Recheneinheit 5 bei Umrechnung der Drehbeschleunigung αₓ in die zugehörige Drehgeschwindigkeit ωₓ mittels Integration, aufgrund des großen Dynamikbereiches des Drehbeschleunigungssensors 4 zu Fehlern kommt, weist der Drehbeschleunigungssensor 4 vorteilhaft zusätzlich einen Drehratenausgang 8 auf.

Somit wird fehlerfrei der entsprechende Drehgeschwindigkeitswert ωₓ an die Auswerteeinheit 11 übertragen. Es können folglich zwei Auswertepfade, einerseits der Drehbeschleunigungspfad über die Recheneinheit 5 und andererseits der Drehgeschwindigkeitspfad über die Auswerteeinheit 11, vom selben Sensor 4 mit unterschiedlichen Messgrößen und mit unterschiedlicher Grenzfrequenz gespeist werden. Die Auslöseentscheidungseinheit 6 wertet demnach die beiden getrennten Pfade gemeinsam aus und aktiviert entweder gemäß einer "Und-" (beide Pfade signalisieren einen bevorstehenden Überrollvorgang) oder einer "Oder-Entscheidung" (einer der beiden Pfade signalisiert einen bevorstehenden Überrollvorgang) die entsprechende Schutzanwendung 7.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Anstatt des zusätzlichen Drehratenausgangs 8 kann auch ein separat angeordneter Drehratensensor für eine direkte Eingabe der Drehgeschwindigkeit ωₓ vorgesehen sein.

Ferner können verschiedenartige Drehbeschleunigungssensoren für eine Messung der Drehbeschleunigung αₓ verwendet werden.

## Patentansprüche

1. Verfahren für eine Aktivierung einer Insassenschutzanwendung (7) in einem Kraftfahrzeug (1), mit folgenden Schritten:
Messen der Drehbeschleunigung (αₓ) des Kraftfahrzeugs (1) um eine zur Fahrzeuglängsachse parallelen Drehachse (x) mittels einer Drehbeschleunigung-Sensoreinrichtung (4);
Auswerten der Messergebnisse mittels einer Recheneinheit (5) für eine Bewertung der Fahrzeugsituation gegenüber seiner Umgebung; und
Aktivieren einer passenden Schutzanwendung (7) für den Fall, dass die Auswertung einen bevorstehenden Überrollvorgang des Kraftfahrzeuges (1) ergibt, **dadurch gekennzeichnet, dass** die Aktivierung in Abhängigkeit von einer Verknüpfung der Drehbeschleunigung (αₓ), der Drehgeschwindigkeit (ωₓ) und der translatorischen Beschleunigungen in Fahrzeugvertikalrichtung (a_{z}) und in Fahrzeugquerrichtung (ay) bestimmt wird, wobei eine Klassifizierung des Drehbeschleunigungsverlaufs auf der Basis von Kraftfahrzeugversuchen erfolgt.

2. Verfahren nach Anspruch 1, **dadurch gekennzeichnet, dass** die Insassenschutzanwendung (7) als Fenster-Airbag und/oder Überrollbügel ausgebildet wird.

3. Verfahren nach einem der Ansprüche 1 oder 2, **dadurch gekennzeichnet, dass** die gemessene Drehbeschleunigung (αₓ) mittels der Recheneinheit (5) und eines Algorithmus in weitere physikalischen Größen wie Drehgeschwindigkeit (ωₓ) und zu erwartender Drehwinkel (ϕₘₐₓ) umgewandelt wird.

4. Verfahren nach einem der vorhergehenden Ansprüche, **dadurch gekennzeichnet, dass** die Drehachse (x) durch die Auflagepunkte der entsprechenden Kraftfahrzeugräder (3) festgelegt wird.

5. Verfahren nach Anspruch 1, **dadurch gekennzeichnet, dass** aus den gemessenen translatorischen Beschleunigungen (ay, a_{z}) mittels der Recheneinheit (5) und eines Algorithmus eine Verschiebung des Kraftfahrzeugschwerpunktes (2) in eine bestimmte Richtung erfasst wird.

6. Verfahren nach einem der vorhergehenden Ansprüche, **dadurch gekennzeichnet, dass** aus der gemessenen Drehbeschleunigung (α_{z}) auch hochfrequente Messanteile ausgewertet werden können.

7. Verfahren nach einem der vorhergehenden Ansprüche, **dadurch gekennzeichnet, dass** die Drehbeschleunigungs-Sensoreinrichtung (4) zusätzlich mit einem Drehratenausgang (8) zum Liefern der Drehgeschwindigkeit (ωₓ) ausgestattet wird.

8. Verfahren nach einem der vorhergehenden Ansprüche, **dadurch gekennzeichnet, dass** neben der Drehbeschleunigungs-Sensoreinrichtung (4) zusätzlich ein Drehratensensor vorgesehen wird.

9. Verfahren nach einem der vorhergehenden Ansprüche, **dadurch gekennzeichnet, dass** die aus der Drehbeschleunigung (αₓ) erhaltenen physikalischen Größen einem weiteren Entscheidungspfad zugeführt werden, wobei gemäß einem "Und"- oder einem "Oder'-Kriterium die einzelnen Pfade in die Auslöseentscheidungseinheit (6) für eine Entscheidung über die Auslösung einer Schutzanwendung (7) eingebracht werden.

## Claims

1. Method for activating a vehicle occupant protection application (7) in a motor vehicle (1), having the following steps:
measurement of the rotational acceleration (αₓ) of the motor vehicle (1) about an axis (x) of rotation which is parallel to the longitudinal axis of the vehicle, by means of a rotational acceleration sensor device (4);
evaluation of the measurement results by means of a computational unit (5) for evaluating the vehicle situation with respect to its environment; and
activation of a suitable protection application (7) in the event of the evaluation indicating an imminent roll-over process of the motor vehicle (1),
**characterized in that** the activation is determined as a function of a logical linking of the rotational acceleration (αₓ), of the rotational speed (ωₓ) and of the translatory accelerations in the vertical direction (a_{z}) of the vehicle and in the transverse direction (a_{y}) of the vehicle, a classification of the profile of the rotational acceleration being carried out on the basis of motor vehicle trials.

2. Method according to Claim 1, **characterized in that** the vehicle occupant protection application (7) is embodied as a window airbag and/or roll-over bar.

3. Method according to one of Claims 1 and 2, **characterized in that** the measured rotational acceleration (αₓ) is converted into further physical variables such as the rotational speed (ωₓ) and anticipated rotational angle (ϕₘₐₓ) by means of the computational unit (5) and an algorithm.

4. Method according to one of the preceding claims, **characterized in that** the axis (x) of rotation is defined by the contact points of the corresponding motor vehicle wheels (3).

5. Method according to Claim 1, **characterized in that** a displacement of the centre of gravity (2) of the motor vehicle in a specific direction is sensed from the measured translatory accelerations (a_{y}, a_{z}) by means of the computational unit (5) and an algorithm.

6. Method according to one of the preceding claims, **characterized in that** high-frequency measurement components can also be evaluated from the measured rotational acceleration (αₓ).

7. Method according to one of the preceding claims, **characterized in that** the rotational acceleration sensor device (4) is additionally equipped with a rotational speed output (8) for supplying the rotational speed (ωₓ).

8. Method according to one of the preceding claims, **characterized in that** in addition to the rotational acceleration sensor device (4) a rotational speed sensor is also provided.

9. Method according to one of the preceding claims, **characterized in that** the physical variables which are obtained from the rotational acceleration (αₓ) are fed to a further decision path, wherein the individual paths are fed into the triggering decision unit (6) in accordance with an "And" or an "Or" criterion for the sake of a decision about the triggering of a protection application (7).

## Revendications

1. Procédé d'activation d'une application (7) de protection des passagers dans un véhicule automobile (1), le procédé comprenant les étapes suivantes :
au moyen d'un dispositif (4) de détection de l'accélération en rotation, mesure de l'accélération en rotation (αₓ) du véhicule automobile (1) autour d'un axe de rotation (x) parallèle à l'axe longitudinal du véhicule,
évaluation des résultats de la mesure au moyen d'une unité de calcul (5) en vue d'évaluer la situation du véhicule par rapport à son environnement et
activation d'une application (7) de protection adaptée au cas où l'évaluation donne pour résultat que le véhicule (1) a antérieurement effectué un tonneau, **caractérisé en ce que**
l'activation est déterminée en fonction d'une association entre l'accélération en rotation (αₓ), la vitesse de rotation (ωₓ) et les accélérations de translation dans la direction verticale (a_{z}) du véhicule ainsi que dans la direction transversale (ay) du véhicule et
**en ce que** l'évolution de l'accélération en rotation est classée sur la base d'essais réalisés sur le véhicule.

2. Procédé selon la revendication 1, **caractérisé en ce que** l'application (7) de protection des passagers est configurée comme coussin gonflable de sécurité de fenêtre et/ou arceau de protection contre les tonneaux.

3. Procédé selon l'une des revendications 1 ou 2, **caractérisé en ce que** l'accélération en rotation (αₓ) mesurée est convertie au moyen de l'unité de calcul (5) et d'un algorithme en d'autres grandeurs physiques, par exemple la vitesse de rotation (ωₓ) et l'angle de rotation (ϕₘₐₓ) auquel il faut s'attendre.

4. Procédé selon l'une des revendications précédentes, **caractérisé en ce que** l'axe de rotation (x) est défini par les points d'appui des roues (3) correspondantes du véhicule automobile.

5. Procédé selon la revendication 1, **caractérisé en ce qu'**un déplacement du centre de gravité (2) du véhicule automobile dans une direction définie est détecté au moyen de l'unité de calcul (5) et d'un algorithme à partir des accélérations de translation (ay, a_{z}) mesurées.

6. Procédé selon l'une des revendications précédentes, **caractérisé en ce que** des composantes à haute fréquence de la mesure peuvent également être évaluées à partir de l'accélération en rotation (αₓ) mesurée.

7. Procédé selon l'une des revendications précédentes, **caractérisé en ce que** le dispositif (4) de détection de l'accélération en rotation est en plus doté d'une sortie (8) de vitesse de rotation qui délivre la vitesse de rotation (ωₓ).

8. Procédé selon l'une des revendications précédentes, **caractérisé en ce qu'**un détecteur de vitesse de rotation est prévu en plus du dispositif (4) de détection de l'accélération en rotation.

9. Procédé selon l'une des revendications précédentes, **caractérisé en ce que** les grandeurs physiques obtenues à partir de l'accélération en rotation (αₓ) sont amenées sur un autre parcours de décision, dans lequel les différents parcours interviennent selon un critère "ET" ou un critère "OU" dans l'unité (6) de décision de déclenchement qui décide du déclenchement d'une application de protection (7).
